# EUROPEAN PATENT SPECIFICATION

(11) **EP 3 279 086 B1**
(45) Date of publication and mention of the grant of the patent: **27.09.2023**
(21) Application number: 16182732.4
(22) Date of filing: 04.08.2016
(51) Int. Cl.: B64C 25/60

(54) **AIRCRAFT LANDING GEAR SHOCK ABSORBER STRUT**
STOSSDÄMPFERSTREBE EINES FLUGZEUGFAHRWERKS
JAMBE D'AMORTISSEUR DE CHOCS DE TRAIN D'ATTERRISSAGE D'AVION

(43) Date of publication of application: 07.02.2018
(73) Proprietor: Safran Landing Systems UK Ltd, Gloucester, Gloucestershire GL2 9QH (GB)
(72) Inventor: Schmidt, Robert Kyle, Gloucester, Gloucestershire GL2 9QH (GB)
(74) Representative: Latham, Stuart Alexander

(56) References cited:
- EP-A1- 2 343 401
- EP-A1- 2 848 523
- EP-A1- 3 192 737
- EP-A2- 0 189 626
- EP-A2- 2 210 811
- WO-A1-2011/009463
- JP-A- S62 283 229
- US-A- 5 137 374
- Michael J. Schneider: "Introduction to Surface Hardening of Steels*", , 1 January 2013 (2013-01-01), XP055573621, Retrieved from the Internet: URL:https://www.asminternational.org/docum ents/10192/22533690/5344G_Sample_BuyNow.pd f/96e9ae44-b6a1-420c-abf5-ee32a98280d5 [retrieved on 2019-03-25]

## Description

### Background of the Invention

Weight and corrosion resistance are important factors when designing an aircraft landing gear.

Titanium is a well-known aerospace material that is relatively light in weight in comparison to steel and is also resistant to corrosion in use. It is known, for example, to form the outer cylinder of a main shock absorber strut from titanium because it is one of the heaviest parts of a landing gear.

It is known that if a metallic bearing is run against a bare titanium counter-face, the titanium counter-face is likely to suffer from wear caused by adhesion between the sliding surfaces. This is known in the art as "galling". It is therefore known to run a non-metallic bearing, such as a polymer bearing, against a bare titanium counter-face in order to reduce the likelihood of galling.

The present inventor has identified that aircraft landing gear shock absorber struts in which a non-metallic bearing is run against a bare titanium counter-face can result in premature wear in comparison to other solutions, thereby requiring an increased level of maintenance, repair and/or overhaul.

EP2210811 A2 defines an aircraft shock strut including a cylinder and a piston movable within the cylinder. A lower bearing and an upper bearing provide sliding engagement between the cylinder and the piston. The upper bearing is fixed to the cylinder and provides sliding engagement with an outer surface of the piston.

EP2848523 A1 defines a shock strut for an aircraft landing gear which may include a piston with a piston inner surface and a piston outer surface. A telescoping component may be coaxially aligned and able to engage slidably with the piston. At least one of the piston and the telescoping component may be a titanium material.

### Summary of the Invention

According to a first aspect of the present invention, there is provided an aircraft landing gear shock absorber strut according to claim 1.

Thus, the surface of the titanium part that defines the counter-face has been improved to increase its wear resistance and compatibility with a non-metallic bearing. The present inventor has surprisingly found that surface modification treatments such as anodising, titanium nitride ion implantation, bonding and case hardening can reduce the level of maintenance, repair and/or overhaul required. The surface modification treatment can increase the hardness of the bearing counter-face without adversely affecting the degree strain that can be applied to the part before failure of the material which defines the counter-face, in contrast to known coatings.

According to a second aspect of the present invention, there is provided a method of manufacturing an aircraft landing gear shock absorbing strut, according to claim 6.

The following optional features of the invention apply to both the first aspect and the second aspect.

The bearing can comprise a polymer; for example, PTFE or PTFE blended with solid lubricants, or a thermosetting resin containing solid lubricants such as Orkot (TM) C410 provided by Trelleborg Sealing Solutions.

Both the outer cylinder and sliding tube can be formed from titanium.

Where the outer cylinder of the shock absorbing strut is formed from titanium, the counter face can be defined by the treated inner cylindrical surface of the outer cylinder and the bearing can be mounted on the inner sliding tube of the shock absorbing strut.

Where the inner sliding tube of the shock absorbing strut is formed from titanium, the counter face can be defined by the treated outer cylindrical surface of the inner sliding tube and the bearing can be mounted on the inner cylindrical surface of the outer cylinder of the shock absorbing strut adjacent to the bore opening.

These and other aspects of the present invention will become apparent from, and clarified with reference to, the embodiments described herein.

### Brief Description of the Drawings

Embodiments of the present invention will now be described, by way of example only, with reference to the accompanying drawings, in which:

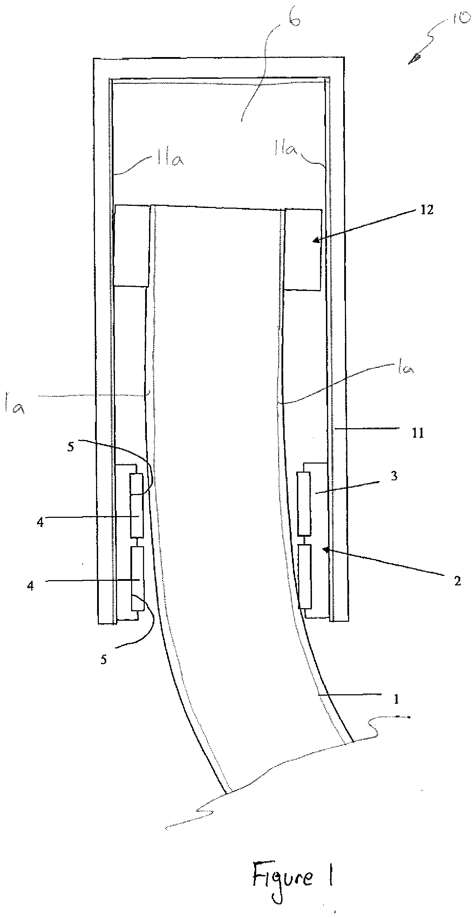

Figure 1 is a diagram of an aircraft landing gear shock absorber strut according to an embodiment of the invention.

### Specification Description of Embodiments of the Invention

Figure 1 shows a shock absorber strut 10 of an aircraft landing gear assembly. The shock absorber strut 10 includes an outer cylinder 11 within which a sliding tube 1 is slidably mounted.

The outer cylinder 11 defines an internal chamber 6 containing shock absorber fluid which provides spring and damping characteristics in a conventional manner. The shock absorber strut 10 can for example be an oleo-pneumatic shock absorber having a compression chamber often divided by a floating piston (not shown) into a first space containing gas, such as nitrogen, and a second space containing oil. When the aircraft lands, the shock absorber strut 10 is compressed, reducing the volume of the compression chamber and, in doing so, compressing the gas. This provides the shock absorbing spring function. Damping is provided by the oil moving through damping orifices (not shown).

The sliding tube 1 supports a wheel or wheeled bogie at its lower end. The top end of the tube 1 defines a piston. The tube 1 is supported by upper and lower bearing assemblies 2 and 12 within the cylindrical internal chamber 6 of the outer cylinder 11.

The upper bearing assembly 12 may be attached to the sliding tube such that it slides within the bore of the outer cylinder 11. Alternatively the upper bearing assembly 12 may be fixed to the bore of the outer cylinder 11 such that the sliding tube 1 slides within it.

The lower bearing assembly 2 is fixed within the lower end of the outer cylinder 11 and the sliding tube 1 is free to slide axially within the lower bearing assembly.

In use, forces applied to the wheel or wheeled bogie in taxi, take-off or landing modes will create a lateral deflection of the tube 1. The lower bearing assembly consists of a bearing housing 3 that supports within it two identical plain bearing rings 4 spaced axially apart and each received in a respective groove 5 of identical depth in the inner surface of the housing 3. However, in other embodiments one or more upper and/or lower bearings can be provided.

The bearing rings 4 may be split rings and are a snap-fit in the grooves 5. When the tube 1 is in a laterally deflected state, as shown exaggerated in Figure 1, it reacts against the upper bearing assembly 12 on one side of the tube, and engages the lower edge 6 of the lower bearing ring on the diametrically opposite side of the tube.

One or both of the outer cylinder 11 and the sliding tube 1 can be formed from titanium or a titanium alloy in a conventional manner. Any suitable titanium or titanium alloy can be used for the outer cylinder 11 and the sliding tube 1; for example, Ti 5-5-5-3 or Ti 10-2-3.

The bearings of the upper bearing assembly 12 and/or lower bearing assembly 2 can be non-metallic; for example, PTFE or PTFE blended with solid lubricants, or a thermosetting resin containing solid lubricants such as Orkot (TM) C410 provided by Trelleborg Sealing Solutions.

The present inventor has identified that a non-metallic bearing running against a bare titanium counter-face can result in premature wear e.g. a greater degree of wear than would be experienced when a non-metallic bearing is running against a harder, traditional counter-face such as steel or chrome.

In the illustrated embodiment, the inner surface of the outer cylinder 11 has been improved by a surface modification treatment to form a hardened layer 11a to increase its wear resistance and compatibility with the non-metallic bearing 12. The outer surface of the sliding tube 1, which defines a counter-face for the lower bearings 4, has also been surface treated as described herein to form a hardened layer 1a at the outer surface, which defines the counter-face for the lower bearings 4.

The present inventor has surprisingly found that surface modification treatments distinct from heat treatment such as anodising, titanium nitride ion implantation, bonding and case hardening, which to the inventor's knowledge have not previously be used as defined herein, can reduce the level of maintenance, repair and/or overhaul required. The surface modification can increase the hardness of the bearing counter-face without adversely affecting the degree strain that can be applied to the part before failure of the material which defines the counter-face, in contrast to known coatings. Also, such treatments do not substantially change the dimension of the part after machining, in contrast to a coating. Moreover, embodiments of the invention do not suffer from other drawbacks associated with providing a hardening coating; for example, electroless nickel plating and the like can require harmful chemicals during processing, while other coating techniques such as HVOF can require projecting material at speed from a gun, which is technically challenging within the bore of the outer cylinder 11.

In one example of a surface treatment, anodisation can be performed to provide a harder, lower friction counter-face to the bearing(s). Anodisation of titanium can be performed to SAE standards AMS2487 or AMS2488. However, other anodisation processes can be performed, including the addition of various acids to the anodisation bath, such as tartaric acid. The length of time or current density can be controlled to increase the anodisation thickness.

Given that anodisation generates a porous, interlinked structure, the properties of the anodisation film can be exploited further by filling the open pores with a lubricant, such as PTFE. The lubricant should be chosen to complement the formulation of the non-metallic bearing. AMS2488 Type 2 is preferred in such embodiments.

In a second example of a surface treatment, local conversion of the surface to titanium nitride can be carried out to increase the hardness and reduce the friction associated with titanium. This can be achieved through ion implantation of nitrogen into the existing titanium.

In the surface treatment according to the invention, the counter-face surface is boridised, a process by which boron atoms are diffused into the surface of a titanium part.

In a third example of a surface treatment, the counter-face surface can be case hardened to produce a relatively thick hard layer; for example, of hardness 56 HRC. Case hardening can be performed to SAE standard AMS2775.

The surface treatment applied can result in a hardened layer 11a that has a thickness such as an average thickness of about 100-300 µm and preferably at least 150 µm. However, the hardened layer can be thinner in some embodiments.

In other embodiments, the hardened layer 11a can be defined by a titanium nitride coating, rather than by way of a surface treatment. This can be achieved through deposition of titanium nitride through known means such as physical or chemical vapour deposition, or gas nitriding. This can result in a hardened layer 11a that has a thickness such as an average thickness of about 100-300 µm and preferably at least 150 µm.

It will be appreciated that in other embodiments just one of the outer cylinder 11 and the sliding tube 1 can be formed from titanium or titanium alloy and provided with a surface treatment or coating as described herein.

In examples where the outer cylinder 11 or sliding tube 1 is not formed from titanium, for example being formed from aluminium or steel, the bearing which runs against the counter-face of that part can be metallic, such as aluminium bronze.

Embodiments of the invention extend to a method of manufacturing an aircraft landing gear shock absorbing strut, the method comprising the steps of: providing a titanium part of the shock absorbing strut which is at least one of an outer cylinder and a sliding tube and which is arranged to define a bearing counter-face; providing a non-metallic bearing arranged to run against the bearing counter-face; applying a surface modification treating distinct from heat treatment to a surface of the titanium part in order to provide a bearing counter-face which is relatively hard in comparison to the harness of the titanium material behind the counter-face, wherein the hardening surface modification does not substantially change the dimension of the part after machining and the surface modification treatment comprises boriding ; and mounting the bearing to run against the counter-face of the titanium part as the shock absorber strut is compressed and extended.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parenthesis shall not be construed as limiting the claims. The word "comprising" does not exclude the presence of elements or steps other than those listed in any claim or the specification as a whole. The singular reference of an element does not exclude the plural reference of such elements and vice-versa. Parts of the invention may be implemented by means of hardware comprising several distinct elements. In a device claim enumerating several parts, several of these parts may be embodied by one and the same item of hardware. The mere fact that certain measures are recited in mutually different dependent claims does not indicate that a combination of these measures cannot be used to advantage.

## Claims

1. An aircraft landing gear shock absorber strut (10) including:
an outer cylinder (11) defining a bore;
a sliding tube (1) slidingly coupled to the outer cylinder to permit the shock absorber strut to extend and compress and having a piston at one end mounted within the bore;
one of the outer cylinder and the sliding tube being formed from a titanium part and being arranged to define a bearing counter-face (1a, 11a); and
a non-metallic bearing (4, 12) arranged to run against the titanium counter-face,
wherein the bearing counter-face is defined by a layer of the titanium part which has received a hardening surface modification distinct from a heat treatment such that the bearing counter-face is relatively hard in comparison to the titanium material behind the counter-face, wherein, the hardening surface modification does not substantially change the dimension of the part after machining, **characterised in that** the surface modification treatment comprises boriding.

2. An aircraft landing gear shock absorber strut according to claim 1, wherein the bearing surface of the bearing comprises a polymer.

3. An aircraft landing gear shock absorber strut according to any preceding claim, wherein both the outer cylinder and sliding tube are formed from titanium.

4. An aircraft landing gear shock absorber strut according to any preceding claim, wherein the outer cylinder of the shock absorbing strut is formed from titanium, the counter face is defined by the inner cylindrical surface of the outer cylinder and the bearing is mounted on the inner sliding tube of the shock absorbing strut.

5. An aircraft landing gear shock absorber strut according to any of claims 1 to 3, wherein the inner sliding tube of the shock absorbing strut is formed from titanium, the counter face is defined by the outer cylindrical surface of the inner sliding tube and the bearing is mounted on the inner cylindrical surface of the outer cylinder of the shock absorbing strut adjacent to the bore opening.

6. A method of manufacturing an aircraft landing gear shock absorbing strut, the method comprising the steps of:
providing a titanium part of the shock absorbing strut which is at least one of an outer cylinder and a sliding tube and which is arranged to define a bearing counter-face;
providing a non-metallic bearing arranged to run against the bearing counter-face;
applying a surface modification treatment distinct from a heat treatment to a surface of the titanium part in order to provide a bearing counter-face which is relatively hard in comparison to the harness of the titanium material behind the counter-face; and
mounting the bearing to run against the counter-face of the titanium part as the shock absorber strut is compressed and extended, wherein the hardening surface modification does not substantially change the dimension of the part after machining,
**characterised in that**
the surface modification treatment comprises boriding.

7. A method according to claim 6, wherein the bearing surface of the bearing comprises a polymer.

8. A method according to any of claims 6 to 7, wherein both the outer cylinder and sliding tube are formed from titanium.

9. A method according to any of claims 6 and 8, wherein the outer cylinder of the shock absorbing strut is formed from titanium, the counter face is defined by the inner cylindrical surface of the outer cylinder and the bearing is mounted on the inner sliding tube of the shock absorbing strut.

10. A method according to claim 8, wherein the inner sliding tube of the shock absorbing strut is formed from titanium, the counter face is defined by the outer cylindrical surface of the inner sliding tube and the bearing is mounted on the inner cylindrical surface of the outer cylinder of the shock absorbing strut adjacent to the bore opening.

11. A method according to claim 6, wherein the surface modification comprises anodising and the method further comprises filling open pores of the anodised surface with a lubricant material.

## Patentansprüche

1. Flugzeugfahrwerkstoßdämpferstrebe (10) mit:
einem äußeren Zylinder (11), der eine Bohrung definiert;
einem Gleitrohr (1), das gleitend bewegbar mit dem äußeren Zylinder gekoppelt ist, um das Ausfahren und Komprimieren der Stoßdämpferstrebe zu ermöglichen, und das an einem Ende einen in der Bohrung angebrachten Kolben aufweist;
wobei der äußere Zylinder oder das Gleitrohr aus einem Titanteil gebildet ist und zum Bilden einer Lager-Gegenfläche (1a, 11a) angeordnet ist; und
einem nicht metallischen Lager (4, 12), das zum Laufen gegen die Titan-Lager-Gegenfläche angeordnet ist, wobei die Lager-Gegenfläche durch eine Schicht des Titanteils gebildet ist, die eine von einer Wärmebehandlung verschiedene Härtungsoberflächenmodifikation erfahren hat, derart, dass die Lager-Gegenfläche im Vergleich mit dem Titanmaterial hinter der Gegenfläche relativ hart ist, wobei die Härtungsoberflächenmodifikation die Abmessung des Teils nach der maschinellen Bearbeitung nicht wesentlich verändert,
**dadurch gekennzeichnet, dass** die Oberflächenmodifikationsbehandlung Borieren aufweist.

2. Flugzeugfahrwerkstoßdämpferstrebe nach Anspruch 1, bei welcher die Lagerfläche des Lagers ein Polymer aufweist.

3. Flugzeugfahrwerkstoßdämpferstrebe nach einem der vorhergehenden Ansprüche, bei welcher sowohl der äußere Zylinder als auch das Gleitrohr aus Titan gebildet ist.

4. Flugzeugfahrwerkstoßdämpferstrebe nach einem der vorhergehenden Ansprüche, bei welcher der äußere Zylinder der Stoßdämpferstrebe aus Titan gebildet ist, die Gegenfläche durch die innere Zylinderfläche des äußeren Zylinders gebildet ist und das Lager an dem inneren Gleitrohr der Stoßdämpferstrebe angebracht ist.

5. Flugzeugfahrwerkstoßdämpferstrebe nach einem der Ansprüche 1 bis 3, bei welcher das innere Gleitrohr der Stoßdämpferstrebe aus Titan gebildet ist, die Gegenfläche durch die äußere Zylinderfläche des inneren Gleitrohrs definiert ist und das Lager an der inneren Zylinderfläche des äußeren Zylinders der Stoßdämpferstrebe nahe der Bohrungsöffnung angebracht ist.

6. Verfahren zur Herstellung einer Flugzeugfahrwerkstoßdämpferstrebe, wobei das Verfahren die folgenden Schritte aufweist:
Vorsehen eines Titanteils der Stoßdämpferstrebe, welches ein äußerer Zylinder und/oder ein Gleitrohr ist, und welches zur Bildung einer Lager-Gegenfläche angeordnet ist;
Vorsehen eines nicht metallischen Lagers, das zum Laufen gegen die Lager-Gegenfläche angeordnet ist;
Anwenden einer von einer Wärmebehandlung verschiedenen Oberflächenmodifikationsbehandlung auf eine Oberfläche des Titanteils, um eine Lager-Gegenfläche bereitzustellen, welche in Vergleich mit der Härte des Titanmaterials hinter der Gegenfläche relativ hart ist; und
Anbringen des Lagers zum Laufen gegen die Gegenfläche des Titanteils beim Ausfahren und Komprimieren der Stoßdämpferstrebe, wobei die Härtungsoberflächenmodifikation die Abmessung des Teils nach der maschinellen Bearbeitung nicht wesentlich verändert,
**dadurch gekennzeichnet, dass** die Oberflächenmodifikationsbehandlung Borieren aufweist.

7. Verfahren nach Anspruch 6, bei welchem die Lagerfläche ein Polymer aufweist.

8. Verfahren nach einem der Ansprüche 6 bis 7, bei welchem sowohl der äußere Zylinder als auch das Gleitrohr aus Titan gebildet ist.

9. Verfahren nach einem der Ansprüche 6 bis 8, bei welchem der äußere Zylinder der Stoßdämpferstrebe aus Titan gebildet ist, die Gegenfläche durch die innere Zylinderfläche des äußeren Zylinders gebildet ist und das Lager an dem inneren Gleitrohr der Stoßdämpferstrebe angebracht ist.

10. Verfahren nach Anspruch 8, bei welchem das innere Gleitrohr der Stoßdämpferstrebe aus Titan gebildet ist, die Gegenfläche durch die äußere Zylinderfläche des inneren Gleitrohrs definiert ist und das Lager an der inneren Zylinderfläche des äußeren Zylinders der Stoßdämpferstrebe nahe der Bohrungsöffnung angebracht ist.

11. Verfahren nach Anspruch 6, bei welchem die Oberflächenmodifikation Anodisieren aufweist, und das Verfahren ferner das Füllen offener Poren der anodisierten Oberfläche mit einem Schmiermittel aufweist.

## Revendications

1. Jambe d'amortisseur de chocs de train d'atterrissage d'avion (10) comprenant :
un cylindre externe (11) définissant un alésage ;
un tube coulissant (1) couplé, de manière coulissante, au cylindre externe pour permettre à la jambe d'amortisseur de chocs de s'étendre et de se comprimer et ayant un piston à une extrémité, monté à l'intérieur de l'alésage ;
l'un parmi le cylindre externe et le tube coulissant étant formé à partir d'une pièce en titane et étant agencé pour définir une face antagoniste de palier (1a, 11a) ; et
un palier non métallique (4, 12) agencé pour s'étendre contre la face antagoniste en titane, dans laquelle la face antagoniste de palier est définie par une couche de la pièce en titane qui a reçu une modification de surface par durcissement distincte d'un traitement thermique de sorte que la face antagoniste de palier est relativement dure par rapport au matériau de titane derrière la face antagoniste, dans laquelle la modification de surface par durcissement ne change sensiblement pas la dimension de la pièce après usinage, **caractérisée en ce que** le traitement de modification de surface comprend la boruration.

2. Jambe d'amortisseur de chocs de train d'atterrissage d'avion selon la revendication 1, dans laquelle la surface de palier du palier comprend un polymère.

3. Jambe d'amortisseur de chocs de train d'atterrissage d'avion selon l'une quelconque des revendications précédentes, dans laquelle à la fois le cylindre externe et le tube coulissant sont formés à partir de titane.

4. Jambe d'amortisseur de chocs de train d'atterrissage d'avion selon l'une quelconque des revendications précédentes, dans laquelle le cylindre externe de la jambe d'amortisseur de chocs est formé à partir de titane, la face antagoniste est définie par la surface cylindrique interne du cylindre externe et le palier est monté sur le tube coulissant interne de la jambe d'amortisseur de chocs.

5. Jambe d'amortisseur de chocs de train d'atterrissage d'avion selon l'une quelconque des revendications 1 à 3, dans laquelle le tube coulissant interne de la jambe d'amortisseur de chocs est formé à partir de titane, la face antagoniste est définie par la surface cylindrique externe du tube coulissant interne et le palier est monté sur la surface cylindrique interne du cylindre externe de la jambe d'amortisseur de chocs adjacente à l'ouverture d'alésage.

6. Procédé pour fabriquer une jambe d'amortisseur de chocs de train d'atterrissage d'avion, le procédé comprenant les étapes suivantes :
prévoir une pièce en titane de la jambe d'amortisseur de chocs qui est au moins l'un parmi un cylindre externe et un tube coulissant et qui est agencé pour définir une face antagoniste de palier ;
prévoir un palier non métallique agencé pour s'étendre contre la face antagoniste de palier ;
appliquer un traitement de modification de surface distinct d'un traitement thermique sur une surface de la pièce en titane afin de fournir une face antagoniste de palier qui est relativement dure par rapport à la dureté du matériau de titane derrière la face antagoniste ; et
monter le palier pour s'étendre contre la face antagoniste de la pièce en titane lorsque la jambe d'amortisseur de chocs est comprimée et étendue, dans lequel la modification de surface par durcissement ne change sensiblement pas la dimension de la pièce après usinage,
**caractérisé en ce que** le traitement de modification de surface comprend la boruration.

7. Procédé selon la revendication 6, dans lequel la surface de palier du palier comprend un polymère.

8. Procédé selon l'une quelconque des revendications 6 à 7, dans lequel à la fois le cylindre externe et le tube coulissant sont formés à partir de titane.

9. Procédé selon l'une quelconque des revendications 6 et 8, dans lequel le cylindre externe de la jambe d'amortisseur de chocs est formé à partir de titane, la face antagoniste est définie par la surface cylindrique interne du cylindre externe et le palier est monté sur le tube coulissant interne de la jambe d'amortisseur de chocs.

10. Procédé selon la revendication 8, dans lequel le tube coulissant interne de la jambe d'amortisseur de chocs est formé à partir de titane, la face antagoniste est définie par la surface cylindrique externe du tube coulissant interne et le palier est monté sur la surface cylindrique interne du cylindre externe de la jambe d'amortisseur de chocs adjacente à l'ouverture d'alésage.

11. Procédé selon la revendication 6, dans lequel la modification de surface comprend l'anodisation et le procédé comprend en outre le remplissage des pores ouverts de la surface anodisée avec un matériau lubrifiant.
